# FASCICULE DE BREVET EUROPEEN

(11) **EP 2 558 293 B1**
(45) Date de publication et mention de la délivrance du brevet: **11.09.2019**
(21) Numéro de dépôt: 11719331.8
(22) Date de dépôt: 04.04.2011
(51) Int. Cl.: B32B 27/08, B32B 27/12, C08J 5/10, C08L 23/08

(54) **FILM IMPER-RESPIRANT A BASE DE COPOLYMERE D'ETHYLENE**
UNDURCHLÄSSIGE ATMUNGSAKTIVE ETHYLENCOPOLYMERFOLIE
IMPERVIOUS BREATHABLE ETHYLENE COPOLYMER FILM

(30) Priorité: 14.04.2010 FR 1052846
(43) Date de publication de la demande: 20.02.2013
(73) Titulaire: Arkema France, 92700 Colombes (FR)
(72) Inventeur: CARTIER, Laurent B., Wayne, Pennsylvania 19087 (US); BIZET, Stéphane, F-27170 Barc (FR)
(74) Mandataire: Gorintin, Sarah
(86) Numéro de dépôt international: PCT/FR2011/050753
(87) Numéro de publication internationale: WO 2011/128554

(56) Documents cités:
- EP-A2- 0 327 402
- WO-A1-01/05588
- WO-A1-2010/124048
- FR-A1- 2 897 356
- US-B1- 6 322 801

## Description

### Domaine de l'invention

La présente invention se rapporte à un film et une structure imper-respirants, c'est-à-dire présentant une perméabilité faible à l'eau liquide mais une forte perméabilité à l'eau sous forme de vapeur.

En particulier, ce film et cette structure trouvent des applications dans le domaine de la construction comme le bardage des constructions (« House Wrapping»), l'emballage, dans le domaine médical, l'hygiène et les vêtements.

### Etat de l'art

Ces films imper-respirants peuvent être utilisés tels quels. Cependant, pour une utilisation en tant que matériau imper-respirant, ils sont souvent appliqués à un support perméable à la vapeur d'eau et conférant à la structure imper-respirante de bonnes propriétés mécaniques. Ces supports sont souvent fabriqués à partir de fibres en polymère synthétique ou de fibres végétales, sous forme de matériaux tissés ou non-tissés.

Il existe des copolymères à blocs polyamides (en particulier PA11, PA 12 et PA-6) et à blocs polyéthers (en particulier polyoxyéthylène glycol (PEG)) vendus en particulier sous le nom Pebax® par ARKEMA, qui se sont développés sur les marchés des films imper-respirants. Il est connu en particulier par le document EP 0 688826 au nom de la demanderesse, d'obtenir des films imper-respirants à partir d'un mélange comprenant: a) au moins un élastomère thermoplastique ayant des blocs polyéther et b) au moins un copolymère d'éthylène et de (méth)acrylate d'alkyle; ces films peuvent être utilisés en combinaison avec des non-tissés ou des tissus, et présentent de fortes perméabilités à la vapeur d'eau (atteignant pour des mélanges avec 60 % en poids du composé a) des valeurs de 22 000 g/m²/24h selon la norme ASTM E96 méthode BW, pour un film d'épaisseur de 25 µm), une faible reprise d'eau et une bonne extrudabilité. Cependant, leur coût est élevé. Des films imper-respirants ayant une épaisseur de 25µm et constitués de copolymère d'éthylène et d'acrylate de méthyle sont également divulgués en tant qu'exemples comparatifs.

Le document EP 0848019, au nom de la demanderesse, décrit un copolymère d'éthylène et d'esters (méth)acrylique de polyoxyalkylèneglycol, (dont la teneur peut aller jusqu'à 50 % en poids). Ce copolymère est utilisé pour l'obtention de films imper-respirants, ayant une perméabilité à la vapeur d'eau ne dépassant pas 10 000 g/m²/24h selon la norme ASTM E96 méthode BW.

Le document EP 1543952 décrit différents films utiles comme revêtement mural à base d'un non-tissé en cellulose et d'une composition de polymère comprenant un polymère et une charge, ce polymère étant choisi parmi les copolymères d'éthylène et de (méth)acrylate d'alkyle, les polyesters ou les copolyesters. Ce film n'est pas utilisé pour le bardage des constructions ou pour fabriquer des films alimentaires. De plus, le seul copolymère d'éthylène et de (méth)acrylate d'alkyle cité dans la demande est un copolymère comprenant 20% en masse d'acrylate de méthyle (Lotryl 20MA08 ou Lotryl 20MB08). Les propriétés imper-respirantes de ces films ne sont pas toujours pleinement satisfaisantes et en particulier ces films peuvent présenter une perméabilité à la vapeur d'eau insuffisante.

Parmi les documents précédents, certains divulguent des films imper-respirants comprenant des mélanges de copolymère d'éthylène et de (méth)acrylate d'alkyle avec des copolymères comprenant des motifs polyéther. Cependant, ces copolymères comprenant des motifs polyéther sont coûteux ; de plus la présence de ces copolymères dans la composition du film rend difficile de former des films ayant une faible épaisseur (par exemple inférieure à 25µm). Le prix de ces films peut donc être relativement élevé.

D'autres sont constitués de copolymère d'éthylène et d'acrylate de méthyle et dont la quantité massique d'acrylate de méthyle est de 20% en poids d'acrylate de méthyle. Cependant, ces films présentent des propriétés imper-respirantes insuffisantes.

Des films de 25µm de copolymère d'éthylène et d'acrylate de méthyle, dont la quantité en acrylate est de 24% ou 28% en poids ont également été décrits. La demanderesse a constaté que les films constitués de ces copolymères d'éthylène et d'acrylate ayant une teneur en poids d'acrylate supérieure à 20% présentent, du fait de la difficulté de leur mise en oeuvre, des trous. Ceci est d'autant plus vrai lorsque l'on applique ces films sur des supports en matériaux fibreux, par exemple par extrusion couchage. Or, la présence de ces trous dégradent les propriétés imper-respirantes du film, en particulier les propriétés d'imperméabilité à l'eau.

Il existe donc toujours un besoin de trouver de nouveaux films et structures imper-respirantes, peu coûteux, dont les procédés de fabrication sont aisés et/ou permettent une productivité accrue.

On connaît également le document EP 0327402 qui décrit une composition constituée d'un mélange d'EVA (éthylène-propylène-diène monomère), d'EPDM (éthylène-acétate de vinyle), éventuellement du polyéthylène ainsi qu'un agent porogène (agent moussant). Il résulte de cette composition et de son procédé d'obtention (par compression) un film poreux qui ne présente absoulement pas des propriétés imper-respirantes.

On connaît enfin le document WO 2010/124048 qui décrit une composition comportant systématiquement des ionomères (l'ajout d'acides carboxyliques étant destiné à entrer dans la formulation du ionomère).

Le document EP 0 327 402 décrit un film imper-respirant comprenant un copolymère d'éthylène et un comonomère portant une fonction acide carboxylique ou un de ses dérivés, mais propose l'utilisation de talc comme agent glissant, ce qui conduit à une imperméabilité insuffisante.

### Résumé de l'invention

A la suite de ses recherches, la demanderesse a trouvé, de manière surprenante, qu'un film ne comprenant pas de polymère portant de motifs polyéther mais comprenant un copolymère particulier d'éthylène et d'un comonomère portant une fonction acide carboxylique ou un dérivé de cet acide ainsi qu'un additif glissant particulier permettait d'obtenir des propriétés imper-respirantes tout à fait satisfaisantes.

La présente invention a donc pour objet un film imper-respirant formé par une composition ne comprenant pas de polymère portant des motifs polyéther, et comprenant un ou plusieurs polymères dont au moins un est un copolymère d'éthylène et d'un comonomère portant une fonction acide carboxylique ou un dérivé de cet acide, caractérisé en ce que la quantité massique en comonomère portant la fonction acide carboxylique ou un dérivé de cet acide dans ledit copolymère est supérieure ou égale à 21%, par exemple de 21 à 40%, préférentiellement de 23 à 30%, la quantité massique dudit copolymère d'éthylène et d'un comonomère portant une fonction acide carboxylique ou un dérivé de cet acide étant comprise dans la gamme allant de 80 à 100% de la masse totale en polymère dans la composition, et en ce qu'elle
comprend un agent glissant choisi parmi les acides gras comprenant de 8 à 80 atomes de carbone et ses dérivés comprenant de 8 à 80 atomes de carbone tels que les sels, les esters ou les amides ou un de leurs mélanges,, le film ayant une épaisseur allant de 2 à 30 µm, préférentiellement de 5 à 24 µm, par exemple de 10 à 20 µm.

Ces films imper-respirants sont peu coûteux. Les propriétés mécaniques et adhésives de la composition formant le film permet une fabrication aisée de ce film, sans déchirure ni présence de trous, ainsi que des structures comprenant ledit film sur un support fibreux.

On peut aisément choisir les propriétés imper-respirantes en sélectionnant l'épaisseur du film, par exemple en augmentant l'épaisseur si on souhaite diminuer la perméabilité à la vapeur d'eau.

De plus, le procédé de fabrication de ces structures peut être réalisé par extrusion-couchage à une vitesse de fabrication plus rapide que les structures comprenant un film à base d'élastomère à blocs polyéther.

Ces films ont des propriétés imper-respirantes particulièrement adaptées à une utilisation pour le bardage des constructions ou l'emballage.

Un agent glissant est un agent permettant de lubrifier la surface d'une composition polymère.

Préférentiellement, l'agent glissant est choisi parmi l'erucamide, l'oléamide, le stéaramide, le behenamide, le oleyl palmitamide, le stearyl erucamide, le N,N'-éthylènebis(stéaramide) et l'éthylene bis-oleamide.

Avantageusement, la quantité massique en additif glissant est comprise dans la gamme allant de 500 à 50000 ppm par rapport à la masse totale de la composition, préférentiellement de 1000 à 10000ppm.

La composition comprend avantageusement un additif siliceux, différent de l'agent glissant, choisi par exemple parmi les silices, les zéolithes et les talcs. Préférentiellement, la quantité massique en additif siliceux est comprise dans la gamme allant de 500 à 100000 ppm par rapport à la masse totale de la composition, préférentiellement de 1000 à 50000 ppm.

Préférentiellement, le comonomère porte une fonction d'un dérivé d'acide carboxylique et est choisi parmi les esters vinyliques d'acide carboxylique, tel que l'acétate de vinyle, et les (méth)acrylates d'alkyle dont la chaîne alkyle comprend de 1 à 20 atomes de carbone, tel que l'acrylate de méthyle.

La quantité massique en copolymère d'éthylène et de comonomère portant la fonction acide carboxylique ou un de ses dérivés est comprise dans la gamme allant de 80 à 100% de la masse totale de polymère dans la composition. Ainsi, le polymère peut être constitué uniquement de copolymère d'éthylène et de comonomère portant la fonction acide carboxylique ou un dérivé de cet acide.

Les propriétés imper-respirantes de ces films sont particulièrement intéressantes, particulièrement pour une utilisation pour le bardage des constructions. Pour une perméabilité à la vapeur d'eau équivalente, ces films ont une épaisseur bien plus faible que les films imper-respirants généralement utilisés, tout en restant imperméable à l'eau sous forme liquide.

Avantageusement, le copolymère d'éthylène et du comonomère portant une fonction acide carboxylique ou un dérivé de cet acide est fabriqué par un procédé de polymérisation radicalaire à haute pression dans un réacteur autoclave.

Ce copolymère a d'excellentes propriétés à l'état fondu, qui permettent par exemple d'améliorer l'application sur un support.

Avantageusement, le film est fait à partir d'une composition présentant, lorsqu'elle est sous la forme d'un film de 25µm, une perméabilité à la vapeur d'eau comprise dans la gamme allant de 35 à 120 g/m²/24h et en utilisant la norme ASTM E96 méthode A (23°C, 50%Humidité Relative).

L'invention porte donc également sur une structure comprenant un film selon l'invention ainsi qu'un support comprenant un matériau fibreux, préférentiellement de type non-tissé ou tissé. Ces fibres peuvent comprendre un polymère synthétique, et/ou des fibres naturelles. A titre non limitatif, on peut citer un non-tissé en polyoléfine, un tissé en polyoléfine ou encore du papier.

La structure sus-dite peut être fabriquée par un procédé par extrusion-couchage. Préférentiellement, le film est couché sur le support. La vitesse dudit support pendant l'extrusion peut être comprise entre 50 et 300m/min.

L'invention a également pour objet l'utilisation du film ou de la structure selon l'invention comme matériau imper-respirant, en particulier pour le bardage des constructions (« House Wrapping ») ou l'emballage.

### Description détaillée de l'invention

Un premier objet de l'invention est un film imper-respirant d'une composition comprenant un copolymère d'éthylène et d'un comonomère portant une fonction acide carboxylique ou un dérivé de cet acide, dans lequel la quantité massique en comonomère dans ledit copolymère est supérieure ou égale à 21%.

Un comonomère est un monomère susceptible de réagir avec l'éthylène pour former un copolymère. A titre d'exemple de comonomère portant une fonction acide ou un de ses dérivés, on peut citer :
- les acides carboxyliques insaturés tels que l'acide acrylique ou l'acide méthacrylique ;
- les anhydrides d'acide carboxylique insaturé ou les anhydrides de diacide carboxylique insaturé tels que l'anhydride maléique ;
- les acrylates d'alkyle et les méthacrylates d'alkyle, regroupés sous le terme (méth)acrylates d'alkyles. Les chaînes alkyles de ces (méth)acrylates peuvent avoir jusqu'à 20 atomes de carbone et être linéaires ou ramifiées. On peut citer comme chaînes alkyles le méthyle, l'éthyle, le propyl, n-butyl, sec-butyl, Isobutyl, tert-butyl, pentyl, hexyl, heptyl, octyl, 2-ethylhexyl, nonyl, decyl, undecyl, dodecyl, tridecyl, tetradecyl, pentadecyl, hexadecyl, heptadecyl, octadecyl, nonadecyl, eicosyl. On préfère le (méth)acrylate de méthyle comme (méth)acrylate d'alkyle ;
- les esters vinyliques d'acide carboxylique. A titre d'exemples d'esters vinyliques d'acide carboxylique, on peut citer l'acétate de vinyle, le versatate de vinyle, le propionate de vinyle, le butyrate de vinyle ou le maléate de vinyle. On préfère l'acétate de vinyle comme ester vinylique d'acide carboxylique.

Préférentiellement, le comonomère portant une fonction acide est un (méth)acrylate d'alkyle.

Le copolymère peut comprendre au moins 2 comonomères portant une fonction acide ou un de ses dérivés.

Le copolymère peut comprendre en outre un autre comonomère susceptible de réagir avec l'éthylène et avec le(s) comonomère(s) portant une fonction acide carboxylique ou un dérivé de cet acide. Le copolymère comprend une quantité supérieure ou égale à 21% en masse de comonomère portant une fonction acide carboxylique ou un dérivé de cet acide. Les quantités des différents monomères présents dans les différents polymères de l'invention peuvent être mesurées par spectroscopie infrarouge, par exemple en utilisant la méthode décrite dans la norme ISO8985.

De tels copolymères sont commercialisés par la demanderesse sous les noms de marque EVATANE® (copolymère d'éthylène et d'acétate de vinyle) et LOTRYL® (copolymère d'éthylène et d'acrylate d'alkyle).

Ces copolymères peuvent être fabriqués par polymérisation radicalaire, par exemple à haute pression. Industriellement, ces copolymères sont fabriqués en utilisant deux types de réacteurs différents : des réacteurs de type «autoclave» et des réacteurs de type «tubulaire». Ces procédés de copolymérisation sont par exemples ceux décrits dans les demandes de brevets FR2660660, FR2498609, FR2569411, FR2569412, US2006/0149004 A1 et US2007/0032614 A1. On obtient respectivement un «copolymère autoclave» et un «copolymère tubulaire». Les propriétés des 2 copolymères obtenus sont différentes. Sans être lié à une théorie quelconque, ces propriétés différentes peuvent être expliquées par des différences de branchement et de répartition des comonomères dans la chaîne polymère. Cela induit en particulier une différence de température de fusion du polymère pour un copolymère obtenu, à partir des mêmes monomères, dans un réacteur autoclave ou obtenu à dans un réacteur tubulaire. Préférentiellement, le copolymère est obtenu en utilisant un réacteur autoclave, ce qui permet une application plus aisée sur un support qu'un copolymère de même composition obtenu en utilisant un réacteur tubulaire. Préférentiellement, le copolymère présente une température de fusion inférieure ou égale à 85°C, de préférence allant de 50 à 80°C, par exemple de 55 à 75°C. Par exemple, cette température peut être mesurée par DSC selon la norme ISO 11357-1:2009.

La composition utilisée pour former le film selon l'invention peut comprendre en outre un autre polymère tel que des polyoléfines. A titre d'exemple de polyoléfine, on peut citer les homopolymères de l'éthylène ou les copolymères de l'éthylène avec une seconde oléfine telle que le butène-1, l'hexène-1 ou l'octène-1.

Préférentiellement, la composition comprend de 80 à 100% en masse de copolymère d'éthylène et d'un comonomère portant une fonction acide carboxylique ou un dérivé de cet acide par rapport à la masse totale de polymère dans la composition. Selon un mode de réalisation, le polymère de la composition est constitué dudit copolymère.

La composition formant le film comprend en outre un agent glissant choisi parmi les acides gras comprenant de 8 à 80 atomes de carbone et ses dérivés comprenant de 8 à 80 atomes de carbone tels que les sels, les esters ou les amides ou un de leurs mélanges. A titre d'exemple d'acide carboxylique, on peut citer l'acide stéarique, l'acide oléique ou l'acide érucique. On peut citer comme sel d'acide carboxylique le stéarate d'aluminium, le stéarate de zinc. Comme ester d'acide gras, on peut utiliser le stéarate de méthyle ou le sétarate d'éthyle. Préférentiellement, l'agent glissant est un amide d'acide gras. Il peut être choisi parmi l'erucamide, l'oléamide, le stéaramide, le behenamide, le oleyl palmitamide, le stearyl erucamide, le N,N'-éthylènebis(stéaramide) et l'éthylene bis-oleamide. La composition peut comprendre un mélange de ces agents glissants.

La composition peut comprendre en outre un additif siliceux qui est choisi parmi la silice, les zéolithes et le talc. Ces additifs peuvent être modifiés en surface par l'intermédiaire d'un traitement. Ces additifs siliceux peuvent avoir une taille de particules allant de plusieurs nanomètres à quelques microns.

La composition peut comprendre en outre d'autres additifs permettant d'améliorer une des propriétés du polymère, tels qu'un plastifiant, un antioxydant, un stabilisant UV, un agent retardateur de flamme ou un agent démoulant.

La composition du film selon l'invention peut être fabriquée en mélangeant ses différents constituants par les moyens classiques de mise en oeuvre des thermoplastiques, comme par exemple l'extrusion ou le malaxage. On peut utiliser des mélangeurs interne à pales ou à rotors, un mélangeur externe, des extrudeuses mono-vis, bi-vis co-rotatives ou contrarotatives. La température de mise en oeuvre peut être de 80 à 300°C.

Le film selon l'invention présente préférentiellement une épaisseur allant de 2 à 30 µm, préférentiellement de 5 à 24 µm, par exemple de 10 à 20 µm. Préférentiellement, le film comprend moins de 10 trous par m² de film. Tout préférentiellement, le film présente une absence de trous.

Les propriétés imper-respirantes du film sont mesurées en mesurant en particulier la perméabilité à la vapeur d'eau. Celle-ci dépend de l'épaisseur du film évalué et des conditions opératoires, c'est-à-dire de la configuration, la température et les conditions d'humidité du test. Préférentiellement, le film est fait à partir d'une composition présentant une perméabilité à la vapeur d'eau comprise dans la gamme allant de 35 à 120 g/m²/24h lorsqu'elle est sous la forme d'un film de 25µm et en utilisant la norme ASTM E96 méthode A (23°C, 50%Humidité Relative). Avantageusement, le film présente une imperméabilité à l'eau sous forme liquide mesurée par le test de la colonne d'eau selon la norme NF EN 20811 supérieure à 1m.

Pour former le film selon l'invention, on peut utiliser une presse ou une extrudeuse à plat ayant une filière film (de type «cast»). On peut également utiliser un procédé continu dans lequel on forme la composition et immédiatement le film, par exemple en utilisant une extrudeuse de type cast.

Un autre objet de l'invention est une structure comprenant un film selon l'invention sur un support en matériau fibreux.

Un support fibreux est un support discontinu permettant le passage de l'eau sous forme liquide et vapeur. Ce support en matériau fibreux est préférentiellement un tissé ou un non-tissé. Ce matériau fibreux peut être fabriqué à partir de polymère synthétique, tel que les polyoléfines, le polyester ou le polyamide. Il peut également être fabriqué à partir de fibre naturelle, telle que le coton, le lin ou la cellulose. Il peut donc s'agir de non-tissés en polypropylène, de papier ou de tissés en coton.

On peut fabriquer la structure en appliquant le film fabriqué précédemment à un support et en l'assemblant par exemple par pressage.

Selon un mode très avantageux de l'invention, on fabrique la structure selon l'invention par un procédé d'extrusion-couchage du film de la composition sur le support. Un des avantages de la composition utilisée dans la présente invention est qu'elle permet son couchage sur le support sous forme de film ayant une faible épaisseur, par exemple inférieure à 30µm, ledit film présentant un nombre de trous moins élevé que les films de même épaisseur de l'art antérieur, même en utilisant des vitesses de ligne de l'extrusion (défilement du support) entre 50 et 300m/min.

L'invention porte ainsi sur un procédé de fabrication d'une structure selon l'invention par extrusion couchage du film selon l'invention sur un support en matériau fibreux. Préférentiellement, la vitesse de ligne de l'extrusion est entre 50 et 300 m/min.

## Revendications

1. Film imper-respirant d'une composition ne comprenant pas de polymère portant des motifs polyéther et comprenant un ou plusieurs polymères dont au moins un est un copolymère d'éthylène et d'un comonomère portant une fonction acide carboxylique ou un de ses dérivés, dans lequel la quantité massique en comonomère portant la fonction acide carboxylique ou un dérivé de cet acide dans ledit copolymère est supérieure ou égale à 21%, par exemple de 21 à 40%, préférentiellement de 23 à 30%, ainsi qu'un additif glissant choisi parmi les acides gras comprenant de 8 à 80 atomes de carbone et ses dérivés comprenant de 8 à 80 atomes de carbone tels que les sels, les esters ou les amides ou un de leurs mélanges, le film ayant une épaisseur allant de 2 à 30 µm, préférentiellement de 5 à 24 µm, par exemple de 10 à 20 µm.

2. Film selon la revendication précédente, **caractérisé, en ce que** la quantité massique en additif glissant est comprise dans la gamme allant de 500 à 50000 ppm par rapport à la masse totale de la composition, préférentiellement de 1000 à 10000ppm.

3. Film selon l'une des revendications précédentes, **caractérisé en ce que** la composition comprend en outre un additif siliceux choisi parmi les silices, les zéolithes et les talcs.

4. Film selon la revendication 3, **caractérisé en ce que** la quantité massique en additif siliceux est comprise dans la gamme allant de 500 à 100000 ppm par rapport à la masse totale de la composition, préférentiellement de 1000 à 50000 ppm.

5. Film selon l'une des revendications précédentes, **caractérisé en ce que** le comonomère porte une fonction d'un dérivé d'acide carboxylique et est choisi parmi les esters vinyliques d'acide carboxylique, tel que l'acétate de vinyle, et les (méth)acrylates d'alkyle dont la chaîne alkyle comprend de 1 à 20 atomes de carbone, tel que l'acrylate de méthyle.

6. Film selon l'une des revendications précédentes, **caractérisé en ce que** la quantité massique en copolymère d'éthylène et d'un comonomère portant une fonction acide carboxylique ou un dérivé de cet acide est comprise dans la gamme allant de 80 à 100% de la masse totale en polymère dans la composition.

7. Film selon l'une des revendications précédentes, **caractérisé en ce que** le copolymère d'éthylène et du comonomère portant une fonction acide carboxylique ou un dérivé de cet acide est fabriqué par un procédé de polymérisation radicalaire à haute pression dans un réacteur autoclave.

8. Film selon l'une des revendications précédentes, **caractérisé en ce qu'**il est fait à partir d'une composition présentant, lorsqu'elle est sous la forme d'un film de 25 µm, une perméabilité à la vapeur d'eau comprise dans la gamme allant de 35 à 120 g/m²/24h et en utilisant la norme ASTM E96 méthode A (23°C, 50% Humidité Relative).

9. Structure comprenant un film selon l'une des revendications précédentes et un support comprenant un matériau fibreux.

10. Structure selon la revendication 9, **caractérisé en ce que** le support est choisi parmi un matériau fibreux non-tissé ou tissé.

11. Procédé de fabrication d'une structure selon l'une des revendications 9 ou 10 **caractérisé en ce qu'**il est réalisé par extrusion-couchage.

12. Procédé selon la revendication précédente, **caractérisé en ce que** le film est couché sur le support et que la vitesse du support lors de l'extrusion est comprise entre 50 et 300 m/min.

13. Utilisation du film selon l'une des revendications 1 à 8 ou de la structure selon la revendication 9 ou 10 comme matériau imper-respirant.

## Patentansprüche

1. Wasserdichter atmungsaktiver Film aus einer Zusammensetzung, die kein Polymer mit Polyether-Einheiten umfasst und ein oder mehrere Polymere, von denen mindestens eines ein Copolymer von Ethylen und einem Comonomer mit einer Carbonsäurefunktion oder einem Derivat davon ist, wobei die Massenmenge an Comonomer mit der Carbonsäurefunktion oder einem Derivat dieser Säure in dem Copolymer größer oder gleich 21 % ist und beispielsweise 21 bis 40 %, vorzugsweise 23 bis 30 %, beträgt, sowie ein Gleitadditiv, das aus Fettsäuren mit 8 bis 80 Kohlenstoffatomen und Derivaten davon mit 8 bis 80 Kohlenstoffatomen wie Salzen, Estern oder Amiden oder einer Mischung davon ausgewählt sind, umfasst, wobei der Film eine Dicke im Bereich von 2 bis 30 µm, vorzugsweise von 5 bis 24 µm, beispielsweise 10 bis 20 µm, aufweist.

2. Film nach dem vorhergehenden Anspruch, **dadurch gekennzeichnet, dass** die Massenmenge an Gleitadditiv im Bereich von 500 bis 50.000 ppm, bezogen auf die Gesamtmasse der Zusammensetzung, vorzugsweise von 1000 bis 10.000 ppm, liegt.

3. Film nach einem der vorhergehenden Ansprüche, **dadurch gekennzeichnet, dass** die Zusammensetzung außerdem ein siliciumhaltiges Additiv, das aus Siliciumdioxiden, Zeolithen und Talken ausgewählt ist, umfasst.

4. Film nach Anspruch 3, **dadurch gekennzeichnet, dass** die Massenmenge an siliciumhaltigem Additiv im Bereich von 500 bis 100.000 ppm, bezogen auf die Gesamtmasse der Zusammensetzung, vorzugsweise von 1000 bis 50.000 ppm, liegt.

5. Film nach einem der vorhergehenden Ansprüche, **dadurch gekennzeichnet, dass** das Comonomer eine Funktion eines Carbonsäurederivats trägt und aus Carbonsäurevinylestern, wie Vinylacetat, und Alkyl(meth)acrylaten mit 1 bis 20 Kohlenstoffatomen in der Alkylkette, wie Methylacrylat, ausgewählt ist.

6. Film nach einem der vorhergehenden Ansprüche, **dadurch gekennzeichnet, dass** die Massenmenge an Copolymer von Ethylen und einem Comonomer mit einer Carbonsäurefunktion oder einem Derivat dieser Säure im Bereich von 80 bis 100 % der Gesamtmasse an Polymer in der Zusammensetzung liegt.

7. Film nach einem der vorhergehenden Ansprüche, **dadurch gekennzeichnet, dass** das Copolymer von Ethylen und einem Comonomer mit einer Carbonsäurefunktion oder einem Derivat dieser Säure durch ein Hochdruck-Radikalpolymerisationsverfahren in einem Autoklavenreaktor hergestellt wird.

8. Film nach einem der vorhergehenden Ansprüche, **dadurch gekennzeichnet, dass** er aus einer Zusammensetzung hergestellt wird, die in Form eines Films mit einer Dicke von 25 µm eine Wasserdampfdurchlässigkeit im Bereich von 35 bis 120 g/m²/24 h unter Verwendung von ASTM-Norm E96 Methode A (23 °C, 50 % relative Feuchte) aufweist.

9. Struktur, umfassend einen Film nach einem der vorhergehenden Ansprüche und einen Träger, der ein Fasermaterial umfasst.

10. Struktur nach Anspruch 9, **dadurch gekennzeichnet, dass** der Träger aus einem Vliesstoff oder Webstoff ausgewählt ist.

11. Verfahren zur Herstellung einer Struktur nach einem der Ansprüche 9 oder 10, **dadurch gekennzeichnet, dass** es durch Extrusionsbeschichten durchgeführt wird.

12. Verfahren nach dem vorhergehenden Anspruch, **dadurch gekennzeichnet, dass** der Film auf dem Träger aufgetragen wird und dass die Geschwindigkeit des Trägers bei der Extrusion zwischen 50 und 300 m/min liegt.

13. Verwendung des Films nach einem der Ansprüche 1 bis 8 oder der Struktur nach Anspruch 9 oder 10 als wasserdichtes atmungsaktives Material.

## Claims

1. Waterproof-breathable film of a composition not comprising any polymer carrying polyether units and comprising one or more polymers, at least one of which is a copolymer of ethylene and of a comonomer carrying a carboxylic acid functional group or one of its derivatives, in which the amount by weight of comonomer carrying the carboxylic acid functional group or a derivative of this acid in the said copolymer is greater than or equal to 21%, for example from 21 to 40%, preferably from 23 to 30%, and also a slip additive chosen from fatty acids comprising from 8 to 80 carbon atoms and their derivatives comprising from 8 to 80 carbon atoms, such as the salts, esters or amides, or one of their mixtures, the film having a thickness ranging from 2 to 30 µm, preferably from 5 to 24 µm, for example from 10 to 20 µm.

2. Film according to the preceding claim, **characterized in that** the amount by weight of slip additive is within the range extending from 500 to 50 000 ppm, with respect to the total weight of the composition, preferably from 1000 to 10 000 ppm.

3. Film according to either of the preceding claims, **characterized in that** the composition additionally comprises a siliceous additive chosen from silicas, zeolites and talcs.

4. Film according to Claim 3, **characterized in that** the amount by weight of siliceous additive is within the range extending from 500 to 100 000 ppm, with respect to the total weight of the composition, preferably from 1000 to 50 000 ppm.

5. Film according to one of the preceding claims, **characterized in that** the comonomer carries a functional group of a carboxylic acid derivative and is chosen from carboxylic acid vinyl esters, such as vinyl acetate, and alkyl (meth)acrylates, the alkyl chain of which comprises from 1 to 20 carbon atoms, such as methyl acrylate.

6. Film according to one of the preceding claims, **characterized in that** the amount by weight of copolymer of ethylene and of a comonomer carrying a carboxylic acid functional group or a derivative of this acid is within the range extending from 80 to 100% of the total weight of polymer in the composition.

7. Film according to one of the preceding claims, **characterized in that** the copolymer of ethylene and of the comonomer carrying a carboxylic acid functional group or a derivative of this acid is manufactured by a high-pressure radical polymerization process in an autoclave reactor.

8. Film according to one of the preceding claims, **characterized in that** it is made from a composition exhibiting, when it is in the form of a 25 µm film, a permeability to water vapour within the range extending from 35 to 120 g/m²/24 h, using Standard ASTM E96, method A (23°C, 50% relative humidity).

9. Structure comprising a film according to one of the preceding claims and a support comprising a fibrous material.

10. Structure according to Claim 9, **characterized in that** the support is chosen from a non-woven or woven fibrous material.

11. Process for the manufacture of a structure according to either of Claims 9 and 10, **characterized in that** it is carried out by extrusion-coating.

12. Process according to the preceding claim, **characterized in that** the film is coated onto the support and that the speed of the support during the extrusion is between 50 and 300 m/min.

13. Use of the film according to one of Claims 1 to 8 or of the structure according to Claim 9 or 10 as waterproof-breathable material.
